# EUROPÄISCHE PATENTANMELDUNG

(11) **EP 3 882 801 A1**
(43) Veröffentlichungstag der Anmeldung: **22.09.2021**
(21) Anmeldenummer: 20164259.2
(22) Anmeldetag: 19.03.2020
(51) Int. Cl.: G06F 21/62, G06F 16/20

(54) **ZUSAMMENFÜHRUNG VON TEILGRAPHEN**

(71) Anmelder: Siemens Industry Software GmbH, 50823 Köln (DE)
(72) Erfinder: Stuempfig, Thomas, 41334 Nettetal (DE)
(74) Vertreter: Maier, Daniel Oliver

(57) **Zusammenfassung**

Die Erfindung betrifft ein computer-implementiertes Verfahren umfassend: Bereitstellen wenigstens zweier Teilgraphen, Zusammenführen der wenigstens zwei Teilgraphen zu einem Gesamtgraphen basierend auf wenigstens einer Zusammenführungsregel, wobei beim Zusammenführen der wenigstens zwei Teilgraphen basierend auf der wenigstens einen Zusammenführungsregel ein Versionsstand der Zusammenführungsregel gespeichert wird. Weiter betrifft die Erfindung ein System zur Datenverarbeitung, umfassend Mittel zur Ausführung des Verfahrens.

## Beschreibung

Die Erstellung von Gesamtgraphen aus Teilgraphen ermöglicht die strukturierte Auswertung großer Datenmengen. Allerdings lässt sich den erstellten Gesamtgraphen regelmäßig nicht mehr entnehmen, auf welche Weise sie aus den Teilgraphen gebildet worden sind.

Hiervon ausgehend lag der vorliegenden Erfindung, die Aufgabe zugrunde ein computer-implementiertes Verfahren bereitzustellen, mit welchem wenigstens zwei Teilgraphen in rückwirkend nachvollziehbarer Weise zu einem Gesamtgraphen zusammengeführt werden können.

Zur Lösung der Aufgabe wird der Gegenstand des Hauptanspruchs und des Nebenanspruchs vorgeschlagen. Vorteilhafte Ausgestaltungen sind in den Unteransprüchen angeführt.

Vorgeschlagen wird ein computer-implementiertes Verfahren. Das Verfahren umfasst das Bereitstellen wenigstens zweier Teilgraphen. Weiter werden die wenigstens zwei Teilgraphen zu einem Gesamtgraphen basierend auf wenigstens einer Zusammenführungsregel zusammengeführt. Das Verfahren ist dadurch gekennzeichnet, dass beim Zusammenführen der wenigstens zwei Teilgraphen basierend auf der wenigstens einen Zusammenführungsregel ein Versionsstand der Zusammenführungsregel gespeichert wird.

In einer Ausgestaltung umfasst das Bereitstellen der wenigstens zwei Teilgraphen das Aufbereiten von Rohdaten.

Es kann vorgesehen sein, dass das Bereitstellen der wenigstens zwei Teilgraphen das Autorisieren eines Zugriffs auf die Teilgraphen umfasst.

Das Autorisieren eines Zugriffs kann die Verwendung einer Security Assertion Markup Language (SAML) umfassen.

Ebenso kann das Bereitstellen der wenigstens zwei Teilgraphen das Bereitstellen der wenigstens zwei Teilgraphen an einen authentifizierten Anwender umfassen.

In einer Ausgestaltung des Verfahrens kann das Bereitstellen der wenigstens zwei Teilgraphen das Bereitstellen der wenigstens zwei Teilgraphen als statuslose REST-Web Service Methoden mit JSON-LD.

Es kann vorgesehen sein, dass der Gesamtgraph in einer semantischen Datenbank gespeichert wird.

Die wenigstens eine Zusammenführungsregel kann von einem dedizierten Regelautomaten bereitgestellt werden.

Das Aufbereiten von Rohdaten kann das Erstellen einer semantischen Beschreibung der Rohdaten umfassen.

Vorschlagen wird weiter ein System zur Datenverarbeitung, welches Mittel zur Ausführung des Verfahrens, insbesondere nach einer der voranstehend angeführten Ausgestaltungen, aufweist.

Nachfolgend wird der offenbarte Gegenstand unter Berücksichtigung der Zeichnungen näher erläutert. In den Figuren veranschaulichen beispielhaft:

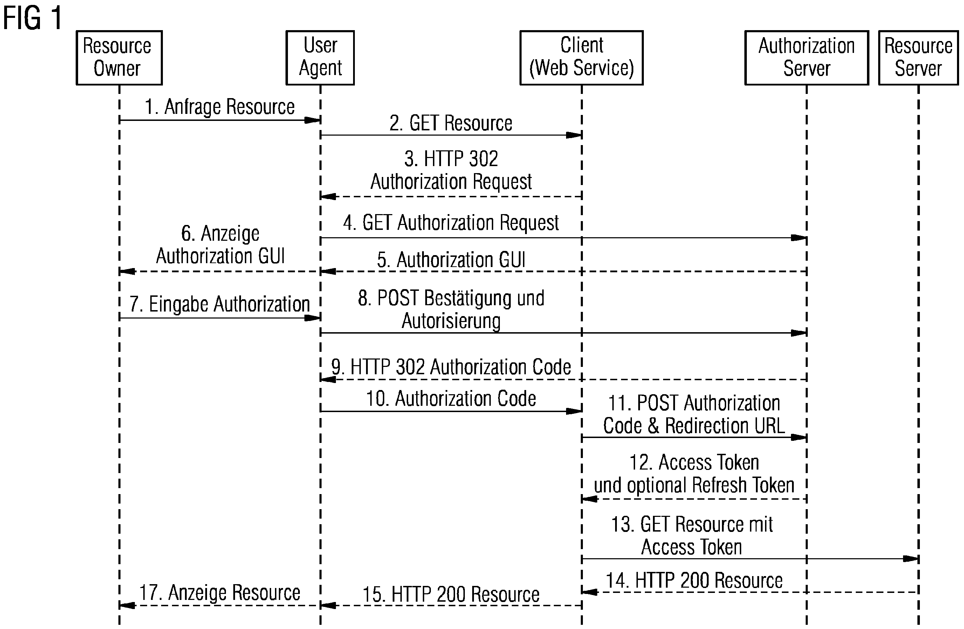

- Fig. 1: eine Autorisierung und Authentifizierung;
- Fig. 2: die Abbildung von Datenstrukturen auf Graphen;

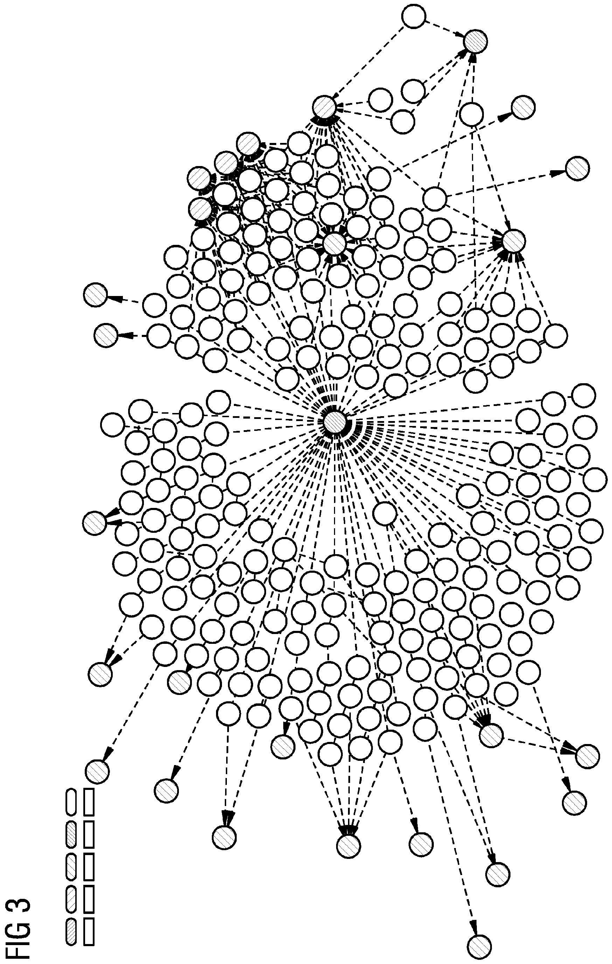

- Fig. 3: einen Graphen; und

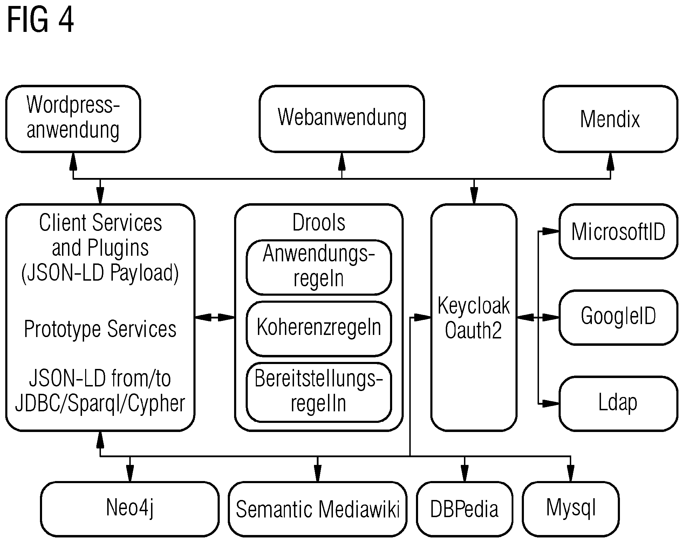

- Fig. 4: eine Architektur zur Umsetzung des Verfahrens.

Die Verarbeitung von Graphen kann von, z.B. stufensequenziellen, spezifischen Lösungen von Teilproblemen der Einzelsysteme innerhalb des relevanten Datenmodelles ausgehen.

Eine Parallelisierung kann innerhalb der jeweiligen Lösungsstufe der stufensequentiellen Lösungsstufen stattfinden.

Beispielsweise kann im Rahmen eines MapReduce Programmiermodells (https://de.wikipedia.org/wiki/MapReduce, 27.02.2020) ein Reduce-Schritt nach dem MAP-Schritt ausgeführt werden.

Bei der Lösung von mit Graphen modellierten Problemstellungen kann hierdurch, insbesondere bei zyklischen Graphen, ein unnötiger zeitlich und/oder logischer Verzug entstehen.

Eine verteilte, wissensbasierende, asynchrone Verarbeitung von Graphen kann vereinfacht werden, wenn über die Einzelsysteme hinweg für eine Eindeutigkeit der Kanten und Knoten gesorgt wird.

Einzelsysteme können dediziert über Direktschnittstellen oder Enterprise Service Bus Komponenten gekoppelt werden und die Datenherkunft im Zielsystem mit gesonderten Metadaten kenntlich und der Verarbeitung zugänglich gemacht werden.

Alternativ können Nachrichten zwischen den Einzelsystemen ausgetauscht und so die Daten im Zielsystem angepasst werden.

Es kann gewünscht sein, die globale Kohärenz der Daten gegenüber diesen beiden Methoden zu verbessern.

Hierzu wird vorgeschlagen, die Daten um automatisiert lesbare semantische Informationen zu ergänzen sowie ausgehend von den lokalen Identifikatoren der Daten oder Datenobjekte eine globale Eindeutigkeit der Daten oder Datenobjekte herzustellen.

Weiter kann eine globale Konfigurationsfähigkeit von Graphen in Bezug auf die logisch historischen und logisch inhaltlichen Kriterien gewünscht sein.

Im Unterschied zu einem lokalen Konfigurationsansatz können RBMS Ansätze mit semantischen Ontologien (Web Ontology Language, OWL) eine globalere Konfigurationsmöglichkeit ermöglichen. Rein ontologiebasierende Regelsysteme sind jedoch auf Datenformate gemäß Resource Description Framework (RDF) beschränkt

Im Rahmen des vorgeschlagenen Verfahrens können die zwei Teilgraphen als statuslose REST-Webservice Methoden mit JSON-LD bereitgestellt werden.

Ein Beispiel für eine Beschreibung mit JSON-LD kann lauten:

```
 \
 "@context": {
 "name "http://rdf data-vocabulary.orgMname",
 "ingredient": "http://rdf.data-vocabulary.orgMingredients",
 "yield": "http://rdfdata-vocabulary.Org/#yield",
 "instruct/ons": "http://rdf data-
 vocabulary' .orgMinstructions".
 "step": {
 "@id": "http://rdf.data-vocabulary.orgMstep",
 "@type": "xsd:integer"
 },
 description": "http://rdf.data-vocabulaty.org/Mescription",
 "xsd": "http://www.w3.org/2001/ XMLSchema#"
 },
 name": "Mojito",
 "ingredient": [
 "12 fresh mint leaves",
 "1/2 lime, juiced with pulp",
 "1 tablespoons white sugar",
 "1 cup ice cubes",
 "2 fluid ounces white rum",
 "1/2 cup club soda"
 },
 "yield": "1 cocktail",
 "instructions": [
 {
 "step": 1,
 "description": "Crush lime juice, mint and sugar together in
 glass."
 }, ...
```

Im Rahmen des Verfahrens können die lokal im Teilsystem, welches auch als Datenquelle angesehen werden kann, eindeutigen Eigenschaften der Datenobjekte global
eindeutig gemacht, indem eine Internationalized Resource Identifier (IRI) erzeugt wird.

Zum Beispiel kann eine lokal eindeutige Eigenschaft, z.B. die Personalnummer: 20002, zu einer globalen IRI, z.B. der : http://firma.de/personalsystem/Personalnummer/20002, umgewandelt werden. Das etablierte DNS System kann dabei helfen, die globale Eindeutigkeit sicherzustellen.

Authentifizierungs- und
Autorisierungsinformationen können definiert und über 0AUTH2 beziehungsweise SAML Verfahren
dezentral bereitgestellt werden, um datenschutzrechtlichen Anforderungen gerecht zu werden.

Die Verwendung von Authentifizierungs- und Autorisierungsinformationen kann es erlauben, dass die Kontrolle über die Verwendung der Daten beim Quellsystem verbleibt.

Nach Authentifizierung und Autorisierung können die aufbereiteten Teilgraphen an authentifizierte Anwender mittels wenigstens einer Zusammenführungsregel zu einem Gesamtgraphen zusammengeführt werden. Die Zusammenführungsregel kann dabei über Rest-Webservices direkt ermittelt werden.

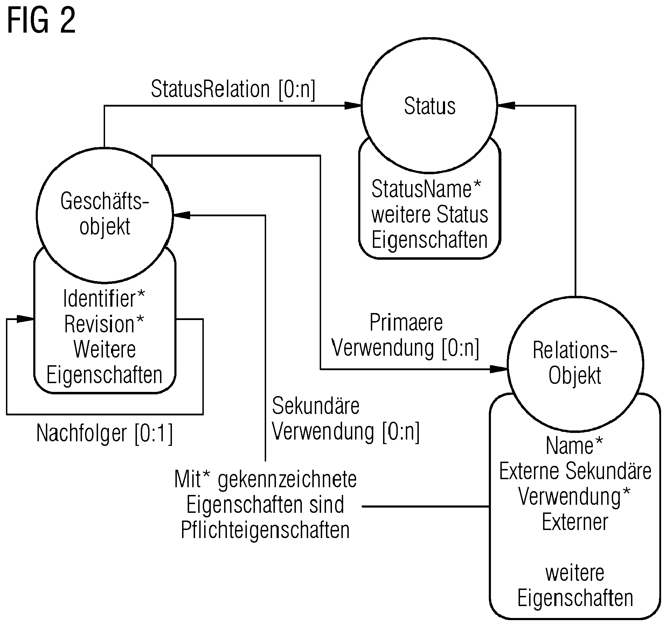

Die Datenstrukturen können beispielsweise über Regelsysteme auf Graphen nach dem Schema der Fig. 2 abgebildet werden.

Als Systeme für die Speicherung der Graphen, Fakten und Regeln, die nicht aus oder in einem der
Angebundenen Systeme entstehen, bieten sich Graphen Datenbanken wie Cassandra oder Neo4J
oder Semantische Triplestores, beispielsweise Fuseki/Jena an. Sie können eine hohe Flexibilität und gute Skalierbarkeit auch bei sehr großen Datenmengen bereitstellen.

Die Zusammenführungsregeln können über dedizierte oder gemeinsam genutzte Regelautomaten (z.B.
Drools/JBPM oder semantische Ontologie basierte Regelsysteme (OWL Reasoner). Hier kann sich die Bereitstellung der Daten in Form von JSON-LD/RDF als hoch flexibel erweisen.

Vorteilhafter Weise können die Anfragen an die Regelsysteme zustandslos erfolgen, wobei die Regelautomaten selbst zustandsbehaftet sein können.

Gesamtgraphen können wieder neue Teilgraphen darstellen. Diese neuen Teilgraphen können über sekundäre Regelsysteme zusammengeführt werden. Die sekundären Regelsysteme können insbesondere Kohärenzregeln aufweisen. Die sekundären Regelsysteme können Anfragen wiederum zustandslos bedienen, auch wenn die Regelautomaten selbst zustandsbehaftet sein können.

Weiter kann eine regelbasierte Verarbeitung des Gesamtgraphen erfolgen.

Die Konsequente Nutzung von zustandslosen asynchronen Aufrufen in Regelbedingungen und Konsequenzen, die je nach Programmiersprache als Future/Promise bezeichnet wird, kann zu einer hoch skalierbaren Anwendung und
Ausführung der Anwendungsregeln führen.
Die semantische Anreicherung der Daten über JSON-LD erlaubt die systemübergreifende logische
Konfiguration der Graphen.

Die Nutzung des vorgeschlagenen Verfahrens kann darüber hinaus auch die Ableitung bezüglich historisch /zeitlich logischer Zusammenhänge ermöglichen.

Die Verwendung von Domain Model Languages von BRMS wie Drools kann vielseitige Regelformulierungen ermöglichen. Unter anderem eine Formulierung der relevanten Regeln ermöglicht werden, welche nahezu der natürlichen Sprache entspricht.

Nachfolgend sei ein Beispiel für eine solche Regel angegeben:

```
 (Drools)
 import org. integrallis.drools. Message
 expander say something, dsl
 rule " Rocky Balboa Says"
 when
 If there is a Person with name of " Rocky Balboa"
 And Person is at least 30 years old and lives in " Philadel-
 phia"
 then
 Say "Yo , Adrian!"
 end
 rule "Person means Tucson"
 when
 When there is a person living in a place with name that
 sounds like " Two Sun"
 then
 Say " You probably meant Tucson"
 end
 query> "Get all Messages"
 get All Messages
 end
```

### Referenzen:

JSON-LD:
   https://en.wikipedia.ora/wiki/JSON-LD;
   https://w3c.aithub.io/ison-ld-svntax/;
   https://ison-ld.org/
Neo4J:
   https://neo4i.com/deveiooer/araoh-database/
Graphendatenbanken:
   https://neo4i.com/graph-databases-book/
Keycloak: httos://www.kevcloak.org/
DBPedia: httosJ/wiki.dboedia.org/
Mysql: httos://www.mvsgl.com/
Semantic Mediawiki:
   https://www.semantic-mediawiki.org/wiki/Semantic MediaWiki
LDAP:
   https://en.wikipedia.org/wiki/Lightweight Directory Access Protocol
Microsoft:
   https://developer.microsoft.com/en-us/identitv
Google:
   https://developers.google.com/identity/

## Patentansprüche

1. Computer-implementiertes Verfahren umfassend:
Bereitstellen wenigstens zweier Teilgraphen,
Zusammenführen der wenigstens zwei Teilgraphen zu einem Gesamtgraphen basierend auf wenigstens einer Zusammenführungsregel,
**dadurch gekennzeichnet, dass**
beim Zusammenführen der wenigstens zwei Teilgraphen basierend auf der wenigstens einen Zusammenführungsregel ein Versionsstand der Zusammenführungsregel gespeichert wird.

2. Computer-implementiertes Verfahren nach Patentanspruch 1,
**dadurch gekennzeichnet, dass**
Bereitstellen der wenigstens zwei Teilgraphen umfasst: Aufbereiten von Rohdaten.

3. Computer-implementiertes Verfahren nach Patentanspruch 1 oder 2,
**dadurch gekennzeichnet, dass**
Bereitstellen der wenigstens zwei Teilgraphen umfasst: Autorisieren eines Zugriffs auf die Teilgraphen.

4. Computer-implementiertes Verfahren nach einem der Patentansprüche 1 bis 3,
**dadurch gekennzeichnet, dass** das Autorisieren eines Zugriffs die Verwendung einer Security Assertion Markup Language (SAML) umfasst.

5. Computer-implementiertes Verfahren nach einem der Patentansprüche 1 bis 4,
**dadurch gekennzeichnet, dass**
Bereitstellen der wenigstens zwei Teilgraphen umfasst: Bereitstellen der wenigstens zwei Teilgraphen an einen authentifizierten Anwender.

6. Computer-implementiertes Verfahren nach einem der Patentansprüche 1 bis 5,
**dadurch gekennzeichnet, dass**
Bereitstellen der wenigstens zwei Teilgraphen umfasst: Bereitstellen der wenigstens zwei Teilgraphen als statuslose REST-Web Service Methoden mit JSON-LD.

7. Computer-implementiertes Verfahren nach einem der Patentansprüche 1 bis 6,
**dadurch gekennzeichnet, dass**
der Gesamtgraph in einer semantischen Datenbank gespeichert wird.

8. Computer-implementiertes Verfahren nach einem der Patentansprüche 1 bis 7,
**dadurch gekennzeichnet, dass** die Zusammenführungsregel von einem dedizierten Regelautomaten bereitgestellt wird.

9. Computer-implementiertes Verfahren nach einem der Patentansprüche 1 bis 8,
**dadurch gekennzeichnet, dass**
das Aufbereiten von Rohdaten das Erstellen einer semantischen Beschreibung der Rohdaten umfasst.

10. System zur Datenverarbeitung, umfassend Mittel zur Ausführung des Verfahrens nach einem der Patentansprüche 1 bis 9.
